# EUROPEAN PATENT APPLICATION

(11) **EP 4 803 905 A1**
(43) Date of publication of application: **09.09.2026**
(21) Application number: 24907079.8
(22) Date of filing: 25.11.2024
(51) Int. Cl.: G01N 35/00, G01N 23/223

(54) **INFORMATION PROCESSING METHOD, INFORMATION PROCESSING DEVICE, AND COMPUTER PROGRAM**

(30) Priority: 20.12.2023 JP 2023214986
(71) Applicant: HORIBA, Ltd., Minami-ku Kyoto-shi Kyoto 601-8510 (JP)
(72) Inventor: MURATA, Shunsuke, Kyoto-shi, Kyoto 601-8510 (JP)
(74) Representative: Isarpatent
(86) International application number: PCT/JP2024/041560
(87) International publication number: WO 2025/134691

(57) **Abstract**

Provided are an information processing method, an information processing device, and a computer program that output a response regarding an analyzer according to a request of a user.

In a method processing device, a query regarding an analyzer is acquired, a response regarding control of the analyzer is acquired according to the query using a language generation model, and the response is output.

## Description

### Technical Field

The present invention relates to an information processing method, an information processing device, and a computer program that analyze a sample.

### Background Art

There are various analyzers that analyze samples. For example, the analyzers include an X-ray analyzer that analyzes X-rays generated from a sample in order to identify components contained in the sample, and a Raman analyzer that analyzes Raman light generated from a sample, and the like. An example of an X-ray analyzer is disclosed in Patent Literature 1. When performing any analysis using an analyzer, the analyzer needs to be appropriately controlled.

### Citation List

### Patent Literature

Patent Literature 1: JP 2023-74559 A

### Summary

### Technical Problems

In cases where a user does not know a method of operating an analyzer, but desires to perform an analysis, it can be difficult to control the analyzer according to a request of the user. Therefore, there is a demand for a technique for obtaining information regarding control of an analyzer according to a request of a user.

An object of the present invention is to provide an information processing method, an information processing device, and a computer program that obtain information regarding control of an analyzer according to a request of a user.

### Solution to Problems

An information processing method according to one aspect of the present invention is characterized by including: acquiring a query regarding an analyzer, acquiring, using a language generation model, a response regarding control of the analyzer according to the query, and outputting the response.

In one aspect of the present invention, a query containing a request of a user regarding an analyzer is acquired, a response regarding control of the analyzer according to the query is acquired using the language generation model, and the response is output. As a result, a response according to the request of the user is output. For example, according to acquisition of a query containing details of processing that the user desires the analyzer to execute, a response to cause the analyzer to execute the processing is output.

An information processing method according to one aspect of the present invention is characterized by including: storing command data recording a specification of a command causing the analyzer to execute processing, acquiring, using the language generation model, the response containing a command causing the analyzer to execute specific processing, according to the query and the command data, and inputting the command contained in the response to the analyzer.

In one aspect of the present invention, according to command data recording a specification of a command causing the analyzer to execute processing and a query, a response containing the command is acquired, and the command is input to the analyzer. The analyzer executes processing according to the command, thereby executing the processing desired by the user.

An information processing method according to one aspect of the present invention is characterized by including: determining whether the command contained in the response is a command executable by the analyzer, and acquiring, when the command contained in the response is a command inexecutable by the analyzer, a new response containing a new command, according to the query, the command data, and the command inexecutable by the analyzer, using the language generation model.

In one aspect of the present invention, it is determined whether a command contained in a response is executable by the analyzer. When the command is executable by the analyzer, processing in accordance with the command is executed by the analyzer. When the command is a command that is not executable by the analyzer, a new response containing a new command is output using the language generation model. As a result, it is possible for the analyzer to reliably execute processing in accordance with the command.

An information processing method according to one aspect of the present invention is characterized by including: modifying the command data, according to whether the command contained in the response is a command executable by the analyzer.

In one aspect of the present invention, command data is modified depending on whether a command contained in a response is executable by the analyzer. The command data reflects whether the command is executable by the analyzer. By using the modified command data, a command to control the analyzer is efficiently acquired.

An information processing method according to one aspect of the present invention is characterized by including: acquiring a processing result in the analyzer in accordance with the command input to the analyzer, and outputting the processing result.

In one aspect of the present invention, a processing result in the analyzer in accordance with a command is output. It is possible for the user to check whether desired processing has been executed.

An information processing method according to one aspect of the present invention is characterized by including: acquiring, as the query, a query containing a request to create a report regarding the analysis result in the analyzer, acquiring the analysis result in the analyzer and a format of the report, acquiring, using the language generation model, the report regarding the analysis result created in accordance with the format, according to the query, the analysis result, and the format, and outputting the report.

In one aspect of the present invention, according to a query containing a request to create a report regarding an analysis result in the analyzer and a format of the report, the report is obtained using the language generation model. The analysis result is output in the form of a report in which details are organized in accordance with the format, and the user can check the analysis result in the analyzer.

An information processing method according to one aspect of the present invention is characterized by including: acquiring a plurality of analysis results of a plurality of analyzers, acquiring, as the query, a query containing a request to create a report obtained by integrating the plurality of analysis results, and acquiring, using the language generation model, the report obtained by integrating the plurality of analysis results created in accordance with the format, according to the query, the acquired plurality of analysis results, and the format.

In one aspect of the present invention, a plurality of analysis results in a plurality of analyzers is acquired, and according to a query containing a request to create a report and a format of the report, the report obtained by integrating the plurality of analysis results is acquired using the language generation model. The details of the plurality of analysis results are output in the form of a report organized in accordance with the format. It is possible for a user to check the plurality of analysis results in the plurality of analyzers in an easily understandable manner.

An information processing method according to one aspect of the present invention is characterized by including: acquiring a type of the analyzer, and acquiring, using the language generation model, the response according to the query and the type of the analyzer.

In one aspect of the present invention, a response according to the type of the analyzer is acquired using the language generation model. Even if the types of analyzers are different, each analyzer can execute processing desired by a user.

An information processing method according to one aspect of the present invention is characterized by including: acquiring, using the language generation model, the response containing a notification to a user regarding control of the analyzer according to the query, and outputting the notification.

In one aspect of the present invention, a response containing a notification to a user regarding control of the analyzer is acquired using the language generation model, and the notification is output. By using the notification, such as the user operating the analyzer in accordance with the output notification, it is possible to cause the analyzer to execute processing desired by the user.

An information processing method according to one aspect of the present invention is characterized by including: acquiring measurement data constituted by a measurement value measured by a sensor provided in the analyzer, and acquiring, using the language generation model, the response, according to the query and the measurement data.

In one aspect of the present invention, a response regarding control of the analyzer is acquired, according to measurement data from a sensor provided in the analyzer using the language generation model. As a result, it is possible for the analyzer to execute processing according to the measurement result in the sensor.

An information processing method according to one aspect of the present invention is characterized by including: acquiring an image, and acquiring, using the language generation model, the response according to the query and the image.

In one aspect of the present invention, a response regarding control of the analyzer is acquired, according to an image using the language generation model. As a result, it is possible to control the analyzer, according to a request from the user expressed using not only natural language but also an image.

An information processing method according to one aspect of the present invention is characterized by including: acquiring, as the image, a photographed image obtained by photographing a sample to be analyzed by the analyzer, and acquiring, using the language generation model, the response containing information for the analyzer to analyze the sample, according to the query and the photographed image.

In one aspect of the present invention, a response regarding control of the analyzer is acquired using the language generation model, according to a photographed image obtained by photographing a sample. It is possible to control the analyzer, according to a request from a user using the photographed image, for example, by designating a specific point on the sample as a measurement point using the photographed image.

An information processing method according to one aspect of the present invention is characterized by including: acquiring a processing result in the analyzer, and acquiring, using the language generation model, the response, according to the query and the processing result in the analyzer.

In one aspect of the present invention, a processing result in the analyzer is acquired, and a response regarding control of the analyzer is acquired, according to the processing result using the language generation model. As a result, it is possible for the analyzer to execute appropriate next processing according to the processing result in the analyzer.

An information processing method according to one aspect of the present invention is characterized by including: acquiring evaluation from the user for the output response, and training the language generation model based on training data containing the query, the response and the evaluation.

In one aspect of the present invention, evaluation from a user for a response obtained using the language generation model is acquired, and the language generation model is trained using the evaluation. By using the trained language generation model, a more appropriate response can be obtained.

An information processing method according to one aspect of the present invention is characterized by including: storing text data regarding the analyzer, acquiring related information related to the query from the text data, and acquiring, using the language generation model, the response, according to the query and the extracted related information.

In one aspect of the present invention, related information related to a query is acquired from text data regarding the analyzer such as a manual, and a response according to the query and the related information is acquired using the language generation model. Since the response obtained using the language generation model is a response generated according to the related information, the response is related to the analyzer. For example, a notification to the user contained in the response is a notification regarding the analyzer such as a method of operating the analyzer.

An information processing device according to one aspect of the present invention is characterized by including: a calculation unit, in which the calculation unit is configured to acquire a query regarding an analyzer, to acquire, using a language generation model, a response regarding control of the analyzer according to the query, and to output the response.

A computer program according to one aspect of the present invention causes a computer to execute acquiring a query regarding an analyzer, acquiring, using a language generation model, a response regarding control of the analyzer according to the query, and outputting the response.

In one aspect of the present invention, an information processing device acquires a query containing a request of a user regarding an analyzer, acquires a response regarding control of the analyzer according to the query using the language generation model, and outputs the response. The information processing device executes processing in accordance with the computer program. According to the query containing details of processing that the user desires the analyzer to execute, a response to cause the analyzer to execute the processing is output. By using the output response, it is possible to cause the analyzer to execute processing desired by the user.

### Advantageous Effects of Invention

According to the present invention, it is possible to obtain information regarding control of an analyzer according to a request of a user and the like, which are excellent effects.

### Brief Description of Drawings

Fig. 1 is a schematic diagram showing a configuration example of an information processing system according to a first embodiment, for controlling an analyzer.
Fig. 2 is a block diagram showing a functional configuration example of the analyzer.
Fig. 3 is a block diagram showing an internal configuration example of a terminal device.
Fig. 4 is a block diagram showing an internal configuration example of an information processing device according to the first embodiment.
Fig. 5 is a diagram showing an example of details of command data.
Fig. 6 is a flowchart showing a first example of a procedure of processing executed by the information processing device according to the first embodiment to control the analyzer.
Fig. 7 is a flowchart showing a second example of a procedure of processing executed by the information processing device to control the analyzer.
Fig. 8 is a flowchart showing a third example of a procedure of processing executed by the information processing device to control the analyzer.
Fig. 9 is a flowchart showing a fourth example of a procedure of processing executed by the information processing device to control the analyzer.
Fig. 10 is a conceptual diagram showing an example of an analysis result.
Fig. 11 is a conceptual diagram showing an example of details of a report format.
Fig. 12 is a flowchart showing an example of a procedure of processing executed by an information processing system 100 to create a report regarding an analysis result in the analyzer.
Fig. 13 is a schematic diagram showing an example of a report regarding an analysis result.
Fig. 14 is a flowchart showing an example of a procedure of training processing performed by the information processing device.
Fig. 15 is a schematic diagram showing a configuration example of an information processing system according to a second embodiment.
Fig. 16 is a block diagram showing an internal configuration example of an information processing device according to the second embodiment.
Fig. 17 is a flowchart showing an example of a procedure of processing executed by the information processing device according to the second embodiment to control the analyzer.

### Description of Embodiments

Hereinafter, the present invention will be specifically described with reference to the drawings showing embodiments thereof.

### <First Embodiment>

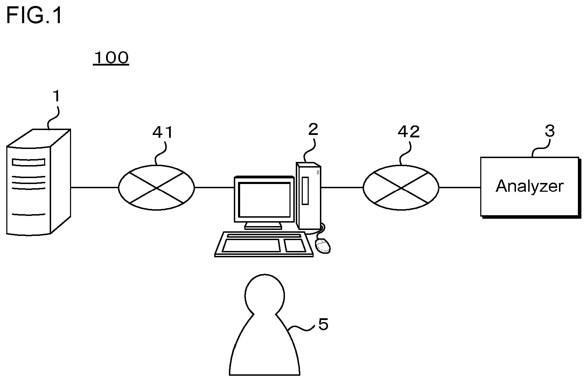

In the present embodiment, a language generation model is used to control an analyzer according to a request of a user. Fig. 1 is a schematic diagram showing a configuration example of an information processing system 100 according to a first embodiment, for controlling an analyzer. The information processing system 100 includes a terminal device 2 that is used by a user 5, an information processing device 1, and an analyzer 3. The information processing device 1 executes an information processing method. The terminal device 2 communicates with the information processing device 1 via a first communication network 41, such as a local area network (LAN) or the Internet. In addition, the terminal device 2 communicates with the analyzer 3 via a second communication network 42. The analyzer 3 is an instrument that measures a phenomenon occurring in a sample and analyzes a measurement result. The analyzer 3 is, for example, an X-ray analyzer.

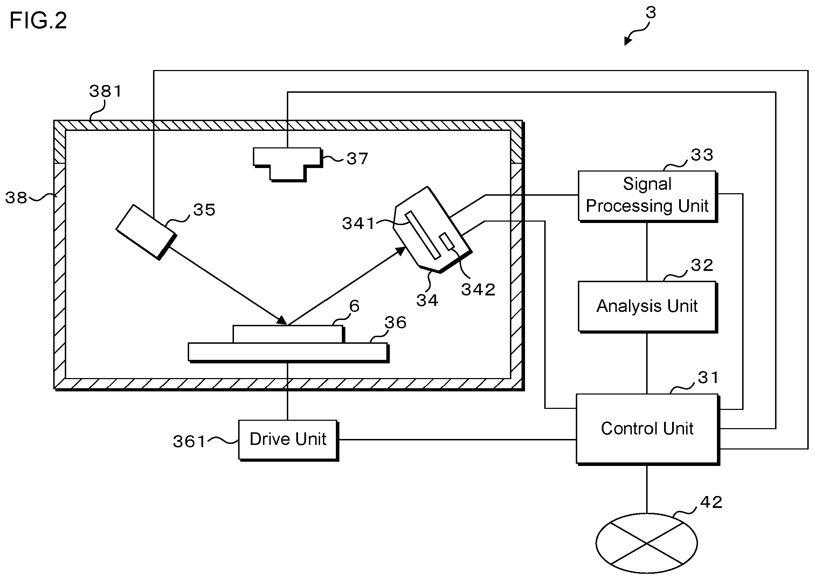

Fig. 2 is a block diagram showing a functional configuration example of the analyzer 3. Fig. 1 shows an example in which the analyzer 3 is an X-ray analyzer. The analyzer 3 includes a sample stage 36 on which a sample 6 is placed, an irradiation unit 35 that irradiates the sample 6 with X-rays, a photographing unit 37 that photographs the sample 6, and a radiation detector 34. The irradiation unit 35 includes an X-ray tube that generates X-rays. The photographing unit 37 includes an optical system and an image sensor. The sample 6 is irradiated with radiation from the irradiation unit 35, a fluorescent X-ray is generated in the sample 6, the fluorescent X-ray is incident on the radiation detector 34, and the radiation detector 34 detects the incident fluorescent X-ray. In the drawing, the X-ray applied to the sample 6 and the fluorescent X-ray incident on the radiation detector 34 are indicated by arrows.

The radiation detector 34 includes a radiation detection element 341 and a temperature sensor 342. The radiation detection element is an element configured using a semiconductor. When a fluorescent X-ray is incident, the radiation detection element 341 outputs a signal depending on the energy of the incident fluorescent X-ray. The radiation detector 34 receives the fluorescent X-ray from the sample 6 and outputs the signal from the radiation detection element 341 according to the incident fluorescent X-ray, thereby detecting the fluorescent X-ray. The temperature sensor 342 measures the temperature inside the radiation detector 34. The temperature sensor 342 is configured using, for example, a thermistor or a thermocouple.

The analyzer 3 includes a sample chamber 38. The sample chamber 38 has a box shape and includes a lid 381 that can be opened and closed. By closing the lid 381, the sample chamber 38 is sealed. The sample stage 36, the irradiation unit 35, the photographing unit 37, and the radiation detector 34 are arranged inside the sample chamber 38. By placing the sample 6 on the sample stage 36, the sample 6 is arranged inside the sample chamber 38. While the lid 381 is opened, the user 5 places the sample 6 on the sample stage 36 or takes out the sample 6. While the lid 381 is closed, the inside of the sample chamber 38 is depressurized, and the sample 6 is irradiated with an X-ray, and a fluorescent X-ray is detected. The irradiation unit 35 may be configured to irradiate the sample 6 arranged inside the sample chamber 38 with radiation from the outside of the sample chamber 38. The photographing unit 37 may be configured to photograph the sample 6 arranged inside the sample chamber 38 from the outside of the sample chamber 38.

The radiation detector 34 is connected to a signal processing unit 33. The signal processing unit 33 receives the signal output from the radiation detector 34 and detects the intensity of the signal, thereby detecting a signal value corresponding to the energy of the radiation detected by the radiation detector 34. The signal processing unit 33 counts signals for each signal value, and outputs data indicating a relationship between the signal value and the number of counts.

The signal processing unit 33 is connected to an analysis unit 32. The analysis unit 32 is configured using a computer. The analysis unit 32 receives the data indicating the relationship between the signal value and the number of counts output from the signal processing unit 33. The analysis unit 32 generates a spectrum of the fluorescent X-ray incident on the radiation detector 34 based on the data from the signal processing unit 33. The spectrum indicates a relationship between the energy and the intensity of the fluorescent X-ray. The processing of counting the signals output from the radiation detector 34 for each signal value may be performed by the analysis unit 32, instead of the signal processing unit 33. The spectrum of the fluorescent X-ray may be generated by the signal processing unit 33. The analysis unit 32 stores spectrum data representing the spectrum of the fluorescent X-ray. In this manner, the analyzer 3 measures the fluorescent X-ray. The analysis unit 32 may further perform information processing based on a spectrum of radiation. For example, the analysis unit 32 performs a qualitative analysis or quantitative analysis of elements contained in the sample 6. The analysis unit 32 stores an analysis result.

The sample stage 36 is coupled to a drive unit 361 that drives the sample stage 36. The drive unit 361 is configured using, for example, a stepping motor. The drive unit 361 drives the sample stage 36, whereby the sample stage 36 is moved. For example, the sample stage 36 is moved in the horizontal direction. By moving the sample stage 36, the sample 6 placed on the sample stage 36 is moved.

The analyzer 3 includes a control unit 31. The control unit 31 is configured using a computer. The control unit 31 is connected to the irradiation unit 35, the photographing unit 37, the radiation detector 34, the signal processing unit 33, the analysis unit 32, and the drive unit 361. The control unit 31 controls operations of the irradiation unit 35, the photographing unit 37, the radiation detector 34, the signal processing unit 33, the analysis unit 32, and the drive unit 361. In addition, the control unit 31 communicates with the terminal device 2 via the second communication network 42. The control unit 31 and the analysis unit 32 may be integrated. The configuration of the analyzer 3 shown in Fig. 2 is an example, and the configuration of the analyzer 3 may be other configurations.

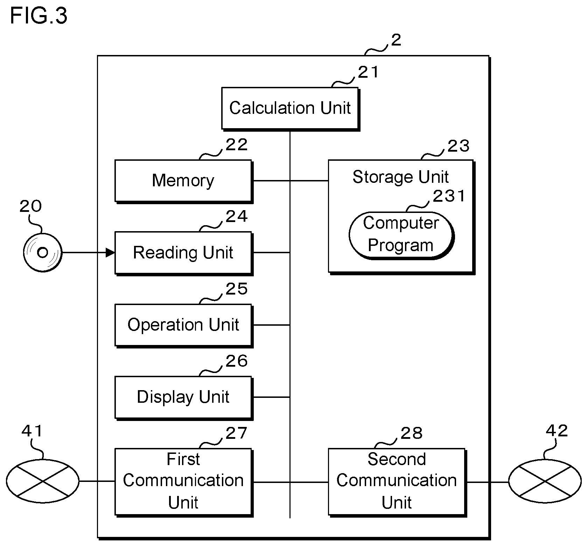

Fig. 3 is a block diagram showing an internal configuration example of the terminal device 2. The terminal device 2 is a computer that is used by the user 5, such as a smartphone, a tablet computer, or a personal computer. The terminal device 2 includes a calculation unit 21, a memory 22, a storage unit 23, a reading unit 24, an operation unit 25, a display unit 26, a first communication unit 27, and a second communication unit 28. The calculation unit 21 is a processor, and is configured using, for example, a central processing unit (CPU), a graphics processing unit (GPU), or a multi-core CPU. The calculation unit 21 may be configured using a quantum computer. The memory 22 stores temporary data generated during calculations. The memory 22 is, for example, a random access memory (RAM). The reading unit 24 reads information from a recording medium 20, such as an optical disk or a portable memory. The storage unit 23 is nonvolatile and is, for example, a hard disk or a nonvolatile semiconductor memory.

The operation unit 25 receives an operation from the user 5, thereby receiving an input of information, such as text. The operation unit 25 is, for example, a touch panel, a keyboard, or a pointing device. The display unit 26 displays an image. The display unit 26 is, for example, a liquid crystal display or an electroluminescent display (EL display). The operation unit 25 and the display unit 26 may be integrated. The first communication unit 27 communicates with the information processing device 1 via the first communication network 41 by wired or wireless communication. The second communication unit 28 communicates with the control unit 31 of the analyzer 3 via the second communication network 42 by wired or wireless communication.

The calculation unit 21 causes the reading unit 24 to read a computer program (program product) 231 recorded on the recording medium 20, and causes the storage unit 23 to store the read computer program 231. The calculation unit 21 executes processing for achieving the functions of the terminal device 2 in accordance with the computer program 231. The computer program 231 may be stored in advance in the storage unit 23 or downloaded from the outside of the terminal device 2. In this case, the terminal device 2 may not include the reading unit 24.

The computer program 231 can be deployed to be executed on a single computer, or on a plurality of computers which are arranged on one site or distributed across a plurality of sites and which are interconnected by a communication network. That is, the terminal device 2 may be constituted by a plurality of computers, and the computer program 231 may be executed on the plurality of computers connected via a communication network.

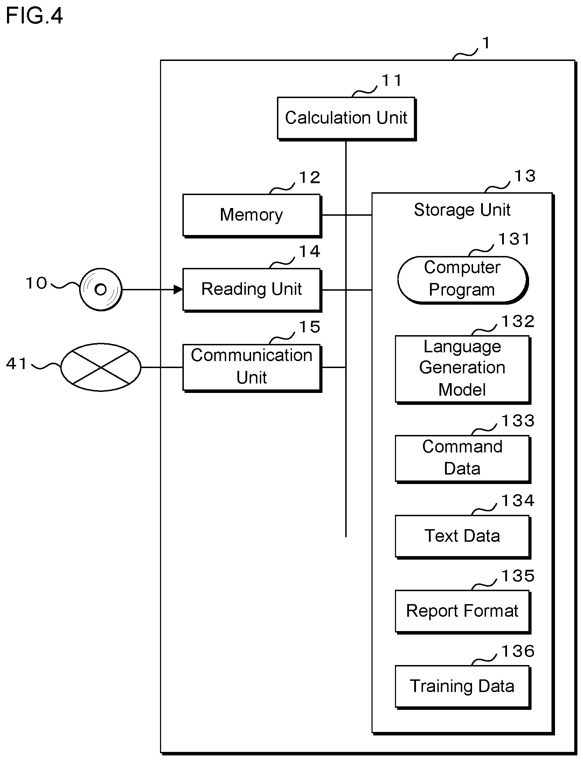

Fig. 4 is a block diagram showing an internal configuration example of the information processing device 1 according to the first embodiment. The information processing device 1 is configured using a computer, such as a server device. The information processing device 1 includes a calculation unit 11, a memory 12 that stores temporary data generated during calculations, a storage unit 13, a reading unit 14, and a communication unit 15. The calculation unit 11 is a processor, and is configured using, for example, a CPU, a GPU, or a multi-core CPU. The calculation unit 11 may be configured using a quantum computer. The memory 12 is, for example, a RAM. The storage unit 13 is nonvolatile and is, for example, a hard disk or a nonvolatile semiconductor memory. The reading unit 14 reads information from a recording medium 10, such as an optical disk or a portable memory. The communication unit 15 communicates with the outside of the information processing device 1 via the first communication network 41 by wired or wireless communication. Specifically, the communication unit 15 communicates with the terminal device 2.

The calculation unit 11 causes the reading unit 14 to read a computer program (program product) 131 recorded on the recording medium 10, and causes the storage unit 13 to store the read computer program 131. The calculation unit 11 executes processing for achieving the functions of the information processing device 1 in accordance with the computer program 131. The computer program 131 may be stored in advance in the storage unit 13 or downloaded from the outside of the information processing device 1. In this case, the information processing device 1 may not include the reading unit 14.

The computer program 131 can be deployed to be executed on a single computer, or on a plurality of computers which are arranged on one site or distributed across a plurality of sites and which are interconnected by a communication network. That is, the information processing device 1 may be constituted by a plurality of computers, and the computer program 131 may be executed on the plurality of computers connected via a communication network. The information processing device 1 may be configured using a cloud server.

Processing in each step for executing the information processing method, which will be described later, can be executed by a plurality of computers. The processing in each step can also be executed by different computers. The processing in each step can also be executed using a virtual machine. The processing in each step may be executed by a plurality of calculation units. The processing in each step may be executed by different calculation units.

The information processing device 1 includes a language generation model 132. The language generation model 132 is a trained model that has been trained to output text according to an input prompt when the prompt constituted by a statement requesting some answer is input. Alternatively, the language generation model 132 is a trained model that has been trained to output text according to an input prompt and information when the prompt and the information attached to the prompt are input. For example, the language generation model 132 is a large language model. More specifically, the language generation model 132 is BERT, GPT-4, Bard, LLaMA, or the like. The language generation model 132 is trained in advance.

The language generation model 132 is implemented by the calculation unit 11 executing information processing in accordance with the computer program 131. The storage unit 13 stores data for implementing the language generation model 132. Note that the language generation model 132 may be configured by hardware. The language generation model 132 may be implemented using a quantum computer. Alternatively, the language generation model 132 may be provided outside the information processing device 1, and the information processing device 1 may execute processing using the external language generation model 132. The language generation model 132 may be implemented using a plurality of computers connected via a communication network, or may be implemented using a cloud.

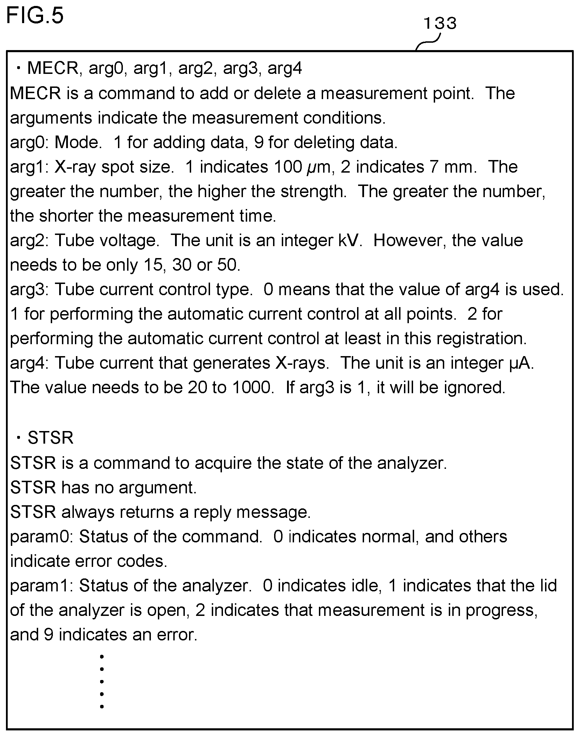

The storage unit 13 stores command data 133. The command data 133 records a specification of a command to cause the analyzer 3 to execute processing. Fig. 5 is a diagram showing an example of details of the command data 133. In the command data 133, a specification of a command to cause the analyzer 3 to execute specific processing is described in text. The command data 133 is defined in accordance with the specifications of the analyzer 3. When a command is input, the analyzer 3 executes processing according to the command. The command data 133 records information regarding a plurality of commands. Fig. 5 shows an example of the command data 133 recording a command MECR to cause the analyzer 3 to add or remove a measurement point and a command STSR to acquire the status of the analyzer 3. The measurement point is a point on the sample 6 to be irradiated with an X-ray, and the fluorescent X-ray generated from the measurement point is measured. The command data 133 also records information regarding other commands.

The storage unit 13 stores text data 134. The text data 134 records text regarding the analyzer 3. For example, the text data 134 contains text describing a method of operating the analyzer 3, explanations of information output from the analyzer 3, a method of handling the sample 6 to be used in the analyzer 3, a method of maintaining the analyzer 3, and the like. For example, the text data 134 contains a manual for the analyzer 3 or a troubleshooting guide regarding the analyzer 3.

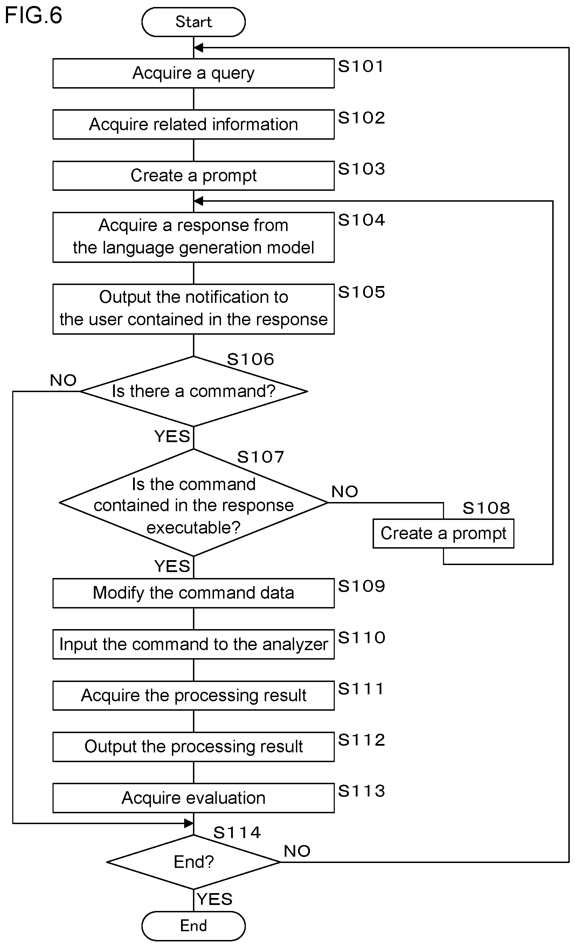

The information processing system 100 controls the analyzer 3 using the language generation model 132. Fig. 6 is a flowchart showing a first example of a procedure of processing executed by the information processing device 1 according to the first embodiment to control the analyzer 3. Hereinafter, a step is abbreviated as S. The calculation unit 11 executes information processing in accordance with the computer program 131, whereby the information processing device 1 executes the following processing. In addition, the calculation unit 21 executes information processing in accordance with the computer program 231, whereby the terminal device 2 executes processing.

The information processing device 1 acquires a query regarding the analyzer 3 (S101). In S101, the user 5 operates the operation unit 25, whereby a query is input to the terminal device 2. The calculation unit 21 causes the first communication unit 27 to transmit the input query to the information processing device 1 via the first communication network 41. The information processing device 1 receives the query transmitted from the terminal device 2 through the communication unit 15, thereby acquiring the query.

The query contains details of processing that the user 5 desires the analyzer 3 to execute. For example, the query is data in natural language. The following is an example of a query to cause the analyzer 3 to execute specific processing.

"Generate the Python code that adds measurement points. The measurement should be as fast as possible. Implement automatic current control. Handle other details as needed. Wait until the device enters an idle state. If the idle state is reached, call print("finished.") to terminate."

This query requests to generate a code to cause the analyzer 3 to execute processing of adding measurement points.

The query may contain details for requesting a notification to the user 5. For example, when an operation method of instructing the analyzer 3 to execute processing is unknown, a query that requests a notification for the operation method is input. The following is an example of a query that requests a notification to the user 5 in natural language.

"What is spot size selection?" What are the advantages of each spot size? Which one should be selected?"

This query requests a notification containing a method of selecting a spot size for irradiating the sample 6 with an X-ray. In this manner, a query containing a request of the user 5 regarding the analyzer 3 is acquired.

The information processing device 1 acquires, from the text data 134, related information related to the acquired query (S102). In S102, the calculation unit 11 searches the text data 134 for related information related to the acquired query, and acquires the related information searched for. For example, the text data 134 is divided into a plurality of portions, such as by page, paragraph, or item, and the calculation unit 11 extracts a keyword contained in the query, searches the text data 134 for a portion containing the keyword, and acquires the portion containing the keyword as the related information. For example, the text data 134 is vectorized, and the calculation unit 11 calculates similarity, such as cosine similarity, between the vectorized keyword and each portion of the vectorized text data 134, and acquires the portion with the highest similarity as the related information.

Next, the information processing device 1 creates a prompt containing the acquired query, the acquired related information, and the command data 133 (S103). In S103, the calculation unit 11 reads the command data 133 from the storage unit 13 and creates a prompt containing the query, the related information, and the command data 133. The calculation unit 11 creates a prompt that requests to create a response containing a command to cause the analyzer 3 to execute processing according to the query and a notification to the user 5, by referring to the related information and the command data 133. For example, the storage unit 13 stores fixed phrases contained in prompts, and the calculation unit 11 creates a prompt containing the fixed phrase, the query, the related information, and the command data 133. For example, the fixed phrase contains information designating the role of the language generation model 132 and a command output format.

The following is an example of the fixed phrase contained in the prompt.

"You are a generator that generates Python scripts in accordance with what the user said in natural language.

The scripts should be generated as simply as possible. Do not generate Python methods. Generate executable code from code alone.

No explanation of the generated code is necessary. Only provide the code.

No explanation of arguments or variables is necessary. Provide only the code.

Commands should start with an ASCII-formatted command name, followed by the entire set of parameters, with each word separated by a comma ",".

For example, the full command for the "ABC" command would be "ABC, 1, 2, 3, 4".

The response command (if defined) would then be "ABC, 2, 3, 4, 5,...". Since this is just a string, split it to get each parameter, always placing the command type at the beginning. The other parameters follow the command type.

In Python, your response should follow the command-sending style.

The method "SendCommand(string_)" is a command that sends the generated command. This method should only be used once per one complete command text. The method "SendAndGetCommand(string_)" is a command that sends the generated command and, if a response value exists, retrieves the response value as a string".

The fixed phrase instructs the generation of a code that causes the analyzer 3 to execute certain processing, and designates a format of the generated code.

The information processing device 1 acquires, from the language generation model 132, a response regarding control of the analyzer 3 according to the query, the command data 133, and the related information (S104). In S104, the calculation unit 11 inputs the created prompt to the language generation model 132. The language generation model 132 performs a calculation and outputs a response, according to the input of the prompt. Since the prompt contains the query regarding control of the analyzer 3, the language generation model 132 outputs a response regarding control of the analyzer 3. The calculation unit 11 acquires the response output from the language generation model 132. The calculation unit 11 stores the acquired response in the memory 12 or the storage unit 13.

Note that the information processing device 1 may perform processing of creating a prompt that does not contain the command data 133 and the related information in S103, and inputting a prompt attached with the command data 133 and the related information to the language generation model 132 in S104. In S103, the information processing device 1 may create a prompt that contains information for referring to the command data 133 and the related information, such as an address at which the command data 133 and the related information are stored, but does not contain the command data 133 and the related information. Alternatively, in S104, the information processing device 1 may train the language generation model 132 using the command data 133 and the related information, input a prompt that does not contain the command data 133 and the related information to the language generation model 132 after the training, and acquire a response.

The information processing device 1 outputs the notification to the user 5 contained in the acquired response (S105). In S105, the calculation unit 11 extracts the notification to the user 5 from the acquired response, and causes the communication unit 15 to transmit the extracted notification to the terminal device 2 via the first communication network 41. The terminal device 2 receives the notification to the user 5 through the first communication unit 27. The calculation unit 21 displays the received notification on the display unit 26, thereby outputting the notification to the user 5. At this time, the calculation unit 21 generates an image containing the notification to the user 5, and displays the generated image on the display unit 26. The user 5 checks the output notification.

Since the notification to the user 5 is contained in the response generated according to the related information, the notification is related to the analyzer 3. The notification to the user 5 is, for example, a notification that instructs the user 5 to perform an operation on the analyzer 3 to control the analyzer 3, such as "Turn on the switch of the analyzer " or "Open the lid, place the sample on the sample stage, and close the lid". The notification to the user 5 is, for example, a notification that request the user to input further information necessary for controlling the analyzer 3.

The notification to the user 5 is a notification according to the query. When the query contains details for requesting a notification to the user 5, the requested notification is contained in the response. For example, according to a query that requests a notification that explains a method of operating the analyzer 3, a notification that explains the method of operating the analyzer 3 is output. The following is an example of a notification according to a query that requests a notification containing a method of selecting a spot size.

"There are two options for selecting the spot size: 1 for 100 µm and 2 for 7 mm. The advantages of each spot size are as follows:
1. The 100 µm spot size improves spatial resolution and enhances the detection limit for small particles and characteristics on the sample surface. However, measurement time increases, and X-ray absorption effects may become more pronounced.
2. The 7 mm spot size provides higher X-ray intensity and shorter measurement times. This is suitable for large samples or samples with high X-ray absorption. However, spatial resolution and detection limits are reduced.

The spot size should be selected based on the sample size and characteristics, as well as the trade-off between spatial resolution and measurement speed".

In this example, a notification that explains how to select the spot size in natural language is obtained.

The user 5 who has checked the output notification operates the analyzer 3 in accordance with the notification. By outputting a notification to the user 5, it is possible to perform control of the analyzer 3 that cannot be performed only by inputting a command to the analyzer 3. When the response does not contain a notification to the user 5, the information processing device 1 omits the processing in S105.

The information processing device 1 determines whether the acquired response contains a command (S106). In S106, the calculation unit 11 determines whether the response contains a command based on the command data 133. The command here means an instruction that causes the analyzer 3 to execute certain processing. The command may be a single instruction or a statement containing a plurality of instructions. The command may be a program or a script. The command may contain a binary code. When the response does not contain a command (S106: NO), the information processing device 1 advances the processing to S114, which will be described later.

When the response contains a command (S106: YES), the information processing device 1 determines whether the command contained in the response is executable by the analyzer 3 (S107). In S107, the calculation unit 11 extracts the command contained in the response, and causes the communication unit 15 to transmit the command to the terminal device 2. The terminal device 2 receives the command through the first communication unit 27. The calculation unit 21 causes the second communication unit 28 to transmit the received command to the analyzer 3 via the second communication network 42. In the analyzer 3, the control unit 31 receives the command transmitted from the terminal device 2 and determines whether processing in accordance with the received command is executable. For example, the control unit 31 verifies whether the command is executable by attempting to execute the command. The control unit 31 transmits a determination result as to whether the command is executable to the terminal device 2, and the terminal device 2 transmits the determination result to the information processing device 1. The information processing device 1 receives the determination result through the communication unit 15. Note that the information processing device 1 itself may perform processing of determining whether the command is executable by the analyzer 3.

When the command contained in the response is not executable by the analyzer 3 (S107: NO), the information processing device 1 creates a prompt according to the command that is not executable by the analyzer 3 (S108). In S108, the calculation unit 11 creates a prompt containing the query, the related information, the command data 133, and the inexecutable command. In order to cause the analyzer 3 to execute processing according to the query, the calculation unit 11 creates a prompt that requests to create a response containing a command different from the command that is not executable by the analyzer 3. For example, the calculation unit 11 designates the inexecutable command and creates a prompt containing a request to create a new command that does not contain the designated command. Alternatively, the calculation unit 11 acquires an error message generated in response to an attempt of the control unit 31 to execute the inexecutable command, and creates a prompt containing a request to create a new command that does not cause the acquired error message to be generated.

Next, the information processing device 1 returns the processing to S104. The calculation unit 11 inputs the prompt created in S108 to the language generation model 132, the language generation model 132 outputs a response according to the prompt, and the calculation unit 11 acquires the response. The command contained in the response is a command different from the command that is not executable by the analyzer 3. In this manner, the information processing device 1 acquires a new response containing a new command, according to the query, the related information, the command data 133, and the command that is not executable by the analyzer 3.

When the command contained in the response is executable by the analyzer 3 (S107: YES), the information processing device 1 modifies the command data 133, according to the determination result as to whether the command is executable by the analyzer 3 (S109). In S109, for example, the calculation unit 11 adds information indicating executability to commands recorded in the command data 133 that have been determined to be executable by the analyzer 3. For example, the calculation unit 11 adds information indicating that prohibition for use to commands recorded in the command data 133 that have been determined to be inexecutable by the analyzer 3. For example, the calculation unit 11 deletes commands determined to be inexecutable by the analyzer 3 from the command data 133.

After the command data 133 is modified, the information processing device 1 acquires a response containing a command according to the modified command data 133 using the language generation model 132. Since the modified command data 133 reflects whether the command is executable by the analyzer 3, a command that is executable by the analyzer 3 is more likely to be contained in the response. Therefore, a command that controls the analyzer 3 can be efficiently acquired. Note that the processing in S109 may be executed when it is determined that the command contained in the response is not executable by the analyzer 3. The processing in S109 may be omitted.

Next, the information processing device 1 inputs the command contained in the response to the analyzer 3 (S110). In S110, the calculation unit 11 causes the communication unit 15 to transmit the command contained in the response to the terminal device 2. The terminal device 2 receives the command and transmits the command to the analyzer 3. In the analyzer 3, the control unit 31 receives the command transmitted from the terminal device 2. In this manner, the information processing device 1 inputs the command contained in the response to the analyzer 3, thereby outputting the response acquired from the language generation model 132. Note that, in S110, the analyzer 3 may execute processing in accordance with the command received in S107 without inputting the command to the analyzer 3 again.

The control unit 31 controls each part of the analyzer 3 in accordance with the command. Each part of the analyzer 3 is operated under the control of the control unit 31, whereby the analyzer 3 executes processing in accordance with the command. For example, the analyzer 3 moves the sample 6, irradiates the sample 6 with an X-ray, detects the generated fluorescent X-ray, and generates a fluorescent X-ray spectrum. The analysis unit 32 stores a processing result. For example, the analysis unit 32 stores the fluorescent X-ray spectrum as the processing result. For example, the analyzer 3 continuously or intermittently measures a physical quantity, such as intensity, of the fluorescent X-ray, and the processing result is time-series data representing a result of continuously or intermittently measuring the physical quantity.

The command contained in the response output by the language generation model 132 is a command according to the query. The command is a command to execute the processing that the query requests the analyzer 3 to execute. The following is an example of a command according to a query that requests the analyzer 3 to execute processing of adding a measurement point.

```
          "# MECR,1,2,30,1
          SendCommand("MECR,1,2,30,1")

          # wait until machine status is idle
          status =ʺʺ
          while status != "0":
          reply = SendAndGetCommand("STSR")
          params = reply.split(",")
          status = params[1]
          # print finished if machine is idle
          if status == "0":
          print("finished.")"
```

In this example, a command that causes the analyzer 3 to execute processing of adding a measurement point is obtained.

The information processing device 1 acquires the processing result in the analyzer 3 (S111). The control unit 31 transmits the processing result in the analyzer 3 to the terminal device 2. The terminal device 2 receives the processing result transmitted from the analyzer 3 and transmits the processing result to the information processing device 1. The information processing device 1 receives the processing result through the communication unit 15. The calculation unit 11 stores the received processing result in the storage unit 13. In this manner, the information processing device 1 acquires the processing result in the analyzer 3.

The information processing device 1 outputs the processing result in the analyzer 3 (S112). In S112, the calculation unit 11 causes the communication unit 15 to transmit the processing result to the terminal device 2. The terminal device 2 receives the processing result, and the calculation unit 21 displays the received processing result on the display unit 26, thereby outputting the processing result. At this time, the calculation unit 21 generates an image containing the processing result, and displays the generated image on the display unit 26. For example, a fluorescent X-ray spectrum is displayed on the display unit 26 as the processing result. For example, a graph representing time series data is displayed as the processing result. The user 5 checks the output processing result in the analyzer 3. The user 5 who has checked the processing result can know whether the processing that the user 5 desires the analyzer 3 to execute has been actually executed.

The information processing device 1 acquires evaluation from the user 5 (S113). In S113, the user 5 operates the operation unit 25, whereby the terminal device 2 acquires the evaluation for the result of the processing in which the information processing device 1 has output the response from the language generation model 132. For example, the calculation unit 11 causes the communication unit 15 to transmit data about an input image for inputting evaluation to the terminal device 2, the terminal device 2 receives the data about the input image, and the calculation unit 21 displays the input image based on the received data on the display unit 26. The user 5 inputs evaluation to the terminal device 2 using the input image, and the terminal device 2 acquires the evaluation. The terminal device 2 transmits the acquired evaluation to the information processing device 1, and the information processing device 1 receives the evaluation. The calculation unit 11 stores the received evaluation from the user 5 in the storage unit 13.

The evaluation from the user 5 is, for example, information designating the processing of the information processing device 1 in two options; good or bad. The evaluation from the user 5 is, for example, information designating the quality of the processing in a plurality of levels more than two levels. The processing in S113 may be omitted.

The information processing device 1 determines whether to end the processing of controlling the analyzer 3 (S114). In S114, for example, the user 5 operates the operation unit 25, whereby the user 5 inputs an end instruction to the terminal device 2, and the terminal device 2 transmits the end instruction to the information processing device 1. Then, when the information processing device 1 receives the end instruction, the calculation unit 11 determines to end the processing. When the end instruction is not received, the calculation unit 11 determines not to end the processing.

When it is determined not to end the processing of controlling the analyzer 3 (S114: NO), the information processing device 1 returns the processing to S101. In S101, the user 5 inputs a query based on the processing result. The information processing device 1 acquires the query and repeats the processing in S102 and subsequent steps. When it is determined to end the processing of controlling the analyzer 3 (S114: YES), the information processing device 1 ends the processing of controlling the analyzer 3.

Although S101 to S114 include processing using the related information acquired from the text data 134, the information processing device 1 may perform processing without using the related information. That is, the processing in S102 may be omitted. Although S101 to S114 include processing of acquiring a response that contains a notification to the user 5, the information processing device 1 may perform processing of acquiring a response that does not contain a notification to the user 5. That is, the processing in S105 may be omitted.

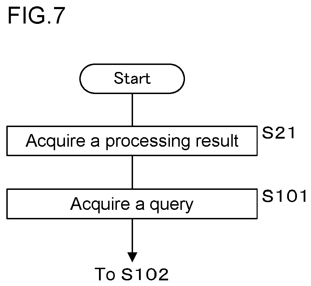

In S101 to S114, the information processing device 1 acquires a response according to the query, the command data 133 and the related information, from the language generation model 132. The information processing device 1 may perform processing of acquiring a response according to the processing result in the analyzer 3. Fig. 7 is a flowchart showing a second example of a procedure of processing executed by the information processing device 1 to control the analyzer 3.

The information processing device 1 acquires a processing result in the analyzer 3 (S21). In S21, the calculation unit 11 reads the processing result in the analyzer 3 stored in the storage unit 13, thereby acquiring the processing result. At this time, the information processing device 1 may cause the terminal device 2 to output the processing result. The information processing device 1 may execute the processing in S21, according to receiving an instruction to acquire the processing result in the analyzer 3 from the terminal device 2, which has been input by the user 5 operating the operation unit 25 to the terminal device 2. For example, the processing result in the analyzer 3 is a spectrum of a fluorescent X-ray. For example, the processing result in the analyzer 3 is time-series data.

Next, the information processing device 1 executes the processing in S101. In S101, the information processing device 1 acquires a query according to the processing result in the analyzer 3. For example, the user 5 inputs, to the terminal device 2, a query that causes the analyzer 3 to execute processing under different conditions from those under which the processing result has been obtained. For example, the processing result is a spectrum of a fluorescent X-ray generated from a specific point on the sample 6, and a query that instructs the acquisition of a spectrum of a fluorescent X-ray generated from a point near the specific point is acquired. For example, the processing result is time-series data, and a query that instructs the execution of an analysis based on the time-series data is acquired.

Next, the information processing device 1 executes the processing in S102 to S114. In S103, the information processing device 1 creates a prompt containing the query, the related information, the command data 133 and the acquired processing result. The information processing device 1 acquires a response according to the query and the processing result in the analyzer 3 from the language generation model 132, through the processing in S104. In this manner, the information processing device 1 can cause the analyzer 3 to execute the appropriate next processing according to the processing result. The information processing device 1 may perform processing of creating a prompt that does not contain the processing result in S103, and inputting the prompt attached with the processing result to the language generation model 132 in S104.

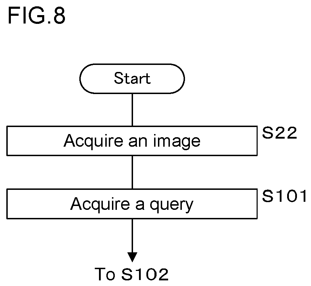

The information processing device 1 may perform processing of acquiring a response according to an image. Fig. 8 is a flowchart showing a third example of a procedure of processing executed by the information processing device 1 to control the analyzer 3. The information processing device 1 acquires an image (S22). In S22, the calculation unit 11 reads an image stored in the storage unit 13, thereby acquiring the image. At this time, the information processing device 1 may cause the terminal device 2 to display the image. The information processing device 1 may execute the processing in S22, according to receiving an instruction to acquire an image from the terminal device 2, which has been input by the user 5 operating the operation unit 25 to the terminal device 2. For example, the image is an image representing a spectrum of a fluorescent X-ray or a mapping image indicating a distribution of elements in the sample 6 obtained by fluorescent X-ray analysis.

Next, the information processing device 1 executes the processing in S101. In S101, the information processing device 1 acquires a query according to the image. For example, the user 5 inputs a query referring to the image to the terminal device 2. For example, a query that asks about the cause of a specific peak contained within the spectrum of the fluorescent X-ray is acquired. For example, a query that requests the acquisition of a position in the sample 6 of a substance containing a specific element contained in the mapping image.

Next, the information processing device 1 executes the processing in S102 to S114. In S103, the information processing device 1 creates a prompt containing the query, the related information, the command data 133 and the acquired image. The information processing device 1 acquires a response according to the query and the image from the language generation model 132, through the processing in S104. In this processing, the information processing device 1 uses a multimodal model that can use an image, such as GPT-4, as the language generation model 132. In this manner, the information processing device 1 can cause the analyzer 3 to execute processing according to the image. The information processing device 1 may perform processing of creating a prompt that does not contain the image in S103, and inputting the prompt attached with the image to the language generation model 132 in S104.

The image acquired by the information processing device 1 in S22 may be a photographed image obtained by photographing the sample 6. The user 5 operates the operation unit 25, thereby inputting an instruction to acquire a photographed image to the terminal device 2, and the terminal device 2 transmits a photographing instruction to the analyzer 3. Under the control of the control unit 31 in accordance with the photographing instruction, the photographing unit 37 photographs the sample 6 and creates a photographed image. The control unit 31 transmits the photographed image to the terminal device 2, and the terminal device 2 transmits the photographed image to the information processing device 1. The information processing device 1 receives the photographed image, thereby acquiring the photographed image.

In S101, the information processing device 1 acquires a query according to the photographed image. For example, the user 5 inputs a query referring to the photographed image to the terminal device 2. For example, a query that designates an arbitrary point on the sample 6 in the photographed image and requests to irradiate the designated point with an X-ray to perform an element analysis is acquired. For example, a query that designates an arbitrary portion of the photographed image and requests to enlarge the designated portion is acquired. For example, a query that requests to obtain a position in the sample 6 of an arbitrary portion contained in the photographed image is acquired. Through the processing in S104, the information processing device 1 acquires, from the language generation model 132, a response containing information for causing the analyzer 3 to execute processing of analyzing the sample 6, according to the query and the photographed image. For example, a response containing a command to cause the analyzer 3 to execute processing of irradiating a designated point on the sample 6 with an X-ray to perform an element analysis or a notification that provides guidance on an operation necessary for causing the analyzer 3 to execute the processing is acquired. In this manner, the information processing device 1 can cause the analyzer 3 to execute processing according to the photographed image obtained by photographing the sample 6.

As described above, the information processing device 1 acquires a query containing a request of the user 5 regarding the analyzer 3, acquires a response regarding control of the analyzer 3 according to the query from the language generation model 132, and outputs the acquired response. As a result, information regarding control of the analyzer 3 according to the request of the user is output. For example, according to the acquisition of a query containing details of processing that the user 5 desires the analyzer 3 to execute, a response to cause the analyzer 3 to execute the processing is output. When a response contains a command that causes the analyzer 3 to execute processing, the analyzer 3 executes the processing according to the command, whereby the analyzer 3 executes the processing desired by the user 5. When a response contains a notification to the user 5, the user 5 can take an action, such as operating the analyzer 3, in accordance with the output notification. Even when a method of operating the analyzer 3 is unknown, a response regarding control of the analyzer 3 according to a request of the user 5 is output. A command that causes the analyzer 3 to execute the processing desired by the user 5 or a notification to cause the analyzer 3 to execute the processing is output, and it is possible to cause the analyzer 3 to execute the processing desired by the user 5.

When an analysis needs to be performed using a method different from the standard method, such as when a special sample, a sample to be analyzed for the first time, or an unknown sample is analyzed by the analyzer 3, the method of operating the analyzer 3 can be unclear. Alternatively, if the analyzer 3 is a different type, the method of operating the analyzer 3 can differ. For example, even for the same X-ray analyzer, the operation method can differ depending on the manufacturer, manufacturing time, or the like. Even if the user 5 is proficient in the operation of one type of the analyzer 3, the operation method of another type of the analyzer 3 can be unknown. Even in such a case, the user 5 inputs a query containing details of processing that the user 5 desires the analyzer 3 to execute, whereby a response to cause the analyzer 3 to execute the processing is obtained, according to the request of the user 5. In this manner, it is possible to cause the analyzer 3 to execute processing according to a request of the user 5.

Even when the operation method or the control method of the analyzer 3 is clear, a response regarding control of the analyzer 3 according to a request of the user 5 can be required. For example, there is a demand for automating an analysis procedure including a plurality of steps, such as input of a command to the analyzer 3, output of a processing result or an error from the analyzer 3, and re-input of a command according to the output. Usually, it is difficult to create a program for automation by combining a plurality of commands. In the present embodiment, the user 5 inputs a query containing an analysis procedure and a request to automate the analysis procedure, and the information processing device 1 can output a response containing a combination of commands that automate the analysis procedure, according to the query. By causing the analyzer 3 to execute processing in accordance with the output response, it is possible to automate the analysis procedure.

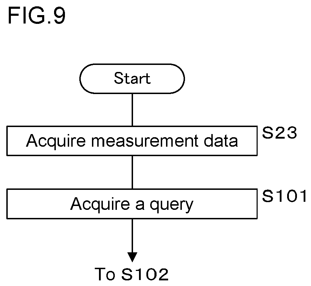

The information processing device 1 may perform processing of acquiring a response according to measurement data by a sensor. Fig. 9 is a flowchart showing a fourth example of a procedure of processing executed by the information processing device 1 to control the analyzer 3. The information processing device 1 acquires measurement data created using the temperature sensor 342 (S23). The user 5 operates the operation unit 25, thereby inputting an instruction to acquire measurement data to the terminal device 2, and the terminal device 2 transmits the instruction to acquire the measurement data to the analyzer 3. In accordance with the instruction, the control unit 31 creates measurement data constituted by a measurement value obtained by the temperature sensor 342 measuring the temperature of the radiation detector 34. The control unit 31 may store measurement data created in advance. The control unit 31 transmits the measurement data to the terminal device 2, and the terminal device 2 transmits the measurement data to the information processing device 1. The information processing device 1 receives the measurement data, thereby acquiring the measurement data.

Next, the information processing device 1 executes the processing in S101. In S101, the information processing device 1 acquires a query according to the measurement data. For example, the user 5 inputs, to the terminal device 2, a query that requests to control the temperature of the radiation detector 34 or a query that requests a notification that advises an operation according to the temperature.

Next, the information processing device 1 executes the processing in S102 to S114. In S103, the information processing device 1 creates a prompt containing the query, the related information, the command data 133, and the measurement data. The information processing device 1 acquires from the language generation model 132 a response according to the query and the measurement data, through the processing in S104. In this manner, the information processing device 1 can cause the analyzer 3 to execute processing according to the measured temperature of the radiation detector 34. The information processing device 1 may perform processing of creating a prompt that does not contain the measurement data in S103, and inputting a prompt attached with the measurement data to the language generation model 132 in S104.

The information processing system 100 can create a report regarding the analysis result in the analyzer 3 using the language generation model 132. The analyzer 3 stores, in the control unit 31 or the analysis unit 32, analysis results recording results of analyses performed so far. The analysis results may be a single processing result or a result analyzed by the analysis unit 32 based on a plurality of processing results.

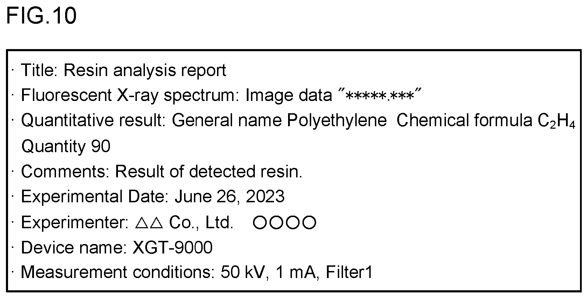

Fig. 10 is a conceptual diagram showing an example of an analysis result. In the example shown in Fig. 10, the analysis result includes a title, a fluorescent X-ray spectrum, a quantitative result, a comment, an experiment date, an experimenter, and measurement conditions. The fluorescent X-ray spectrum is recorded in the form of image data, and in the example shown in Fig. 10, the file name of the image data is described.

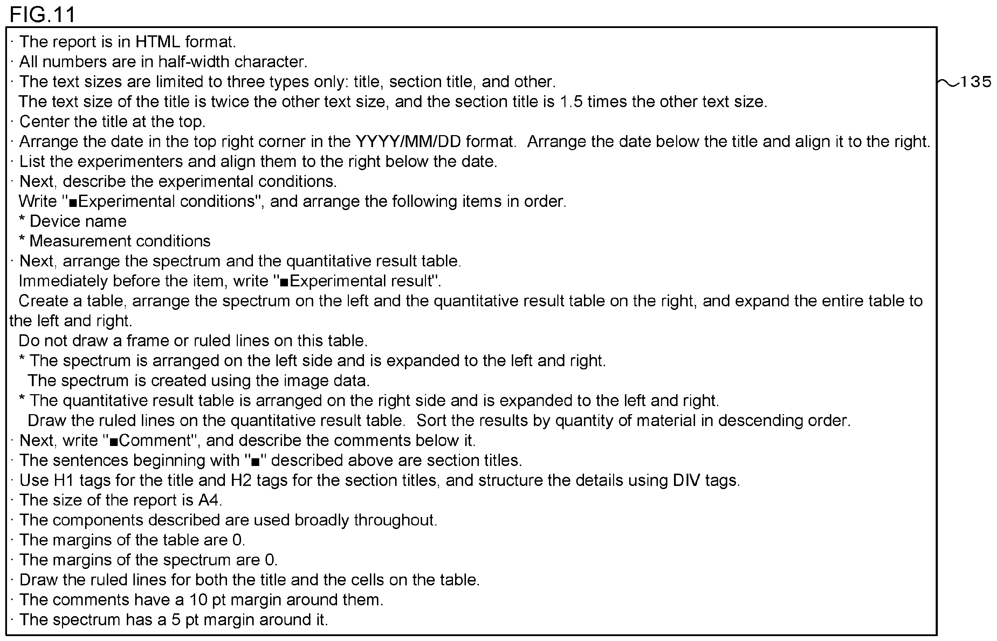

The storage unit 13 stores a report format 135. The report format 135 is information defining a format of a report regarding an analysis result. Fig. 11 is a conceptual diagram showing an example of details of the report format 135. For example, the report format 135 designates a data format of the report or a format of characters in the report. For example, the report format 135 designates respective items included in the report, such as a title, a date, an experimenter, and experimental conditions. For example, the report format 135 designates arrangement of the respective items included in the report within the report. For example, the report format 135 designates an image included in the report, such as a spectrum, or a chart included in the report, such as a table of quantitative results. For example, the report format 135 designates a display format or arrangement of images or diagrams included in the report.

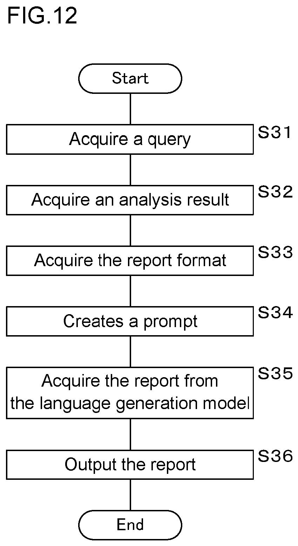

Fig. 12 is a flowchart showing an example of a procedure of processing executed by the information processing system 100 to create a report regarding an analysis result in the analyzer 3. The information processing device 1 acquires a query containing a request to create a report (S31). In S31, the user 5 operates the operation unit 25, whereby a query is input to the terminal device 2, the terminal device 2 transmits the query to the information processing device 1, and the information processing device 1 receives the query transmitted from the terminal device 2, thereby acquiring the query. The query contains a request to create a report regarding an analysis result, such as "create a report applying the analysis result ***.** to a report format". "***.**" included in the query example indicates the file name of the analysis result.

The information processing device 1 acquires an analysis result from the analyzer 3 (S32). In S32, the calculation unit 11 causes the communication unit 15 to transmit a request for an analysis result to the terminal device 2. At this time, the calculation unit 11 may transmit a request for a specific analysis result designated by the query. The terminal device 2 receives the request for the analysis result and transmits the request to the analyzer 3. According to the request for the analysis result, the control unit 31 reads the analysis result and transmits the analysis result to the terminal device 2. The terminal device 2 receives the analysis result and transmits the analysis result to the information processing device 1. The information processing device 1 receives the analysis result through the communication unit 15, thereby acquiring the analysis result. The calculation unit 11 stores the acquired analysis result in the storage unit 13. Note that the information processing device 1 may store an analysis result in the storage unit 13 in advance and read the analysis result from the storage unit 13, thereby acquiring the analysis result.

The information processing device 1 acquires the report format 135 (S33). In S33, the calculation unit 11 reads the report format 135 from the storage unit 13, thereby acquiring the report format 135. Note that a plurality of report formats 135 may be stored in the storage unit 13, information designating any of the report formats 135 may be contained in a query, and the information processing device 1 may acquire the specific report format 135 designated by the query. Alternatively, the information processing device 1 may acquire a query containing a report format in S31, thereby acquiring the report format. In this case, the information processing device 1 does not need to perform the processing in S33 separately from S31.

Next, the information processing device 1 creates a prompt containing the acquired query, the acquired analysis result, and the report format 135 (S34). In S34, according to the query, the calculation unit 11 creates a prompt that requests to create a report regarding the analysis result in accordance with the report format 135.

The information processing device 1 acquires the report from the language generation model 132, according to the prompt (S35). In S35, the calculation unit 11 inputs the created prompt to the language generation model 132. The language generation model 132 performs a calculation and outputs a response, according to the input of the prompt. Since the prompt requires the creation of a report regarding the analysis result, the language generation model 132 outputs the report regarding the analysis result as the response. The calculation unit 11 acquires the report output by the language generation model 132. The calculation unit 11 stores the acquired report in the storage unit 13.

Note that the information processing device 1 may perform processing of creating a prompt that does not contain the analysis result and the report format 135 in S34, and inputting a prompt attached with the analysis result and the report format 135 to the language generation model 132 in S35. Alternatively, in S34, the information processing device 1 may create a prompt that contains information for referring to the analysis result and the report format 135, such as an address at which the analysis result and the report format 135 are stored, and that does not contain the analysis result and the report format 135.

The information processing device 1 outputs the report regarding the analysis result (S36). In S36, the communication unit 15 is caused to transmit the acquired report to the terminal device 2 via the first communication network 41. The terminal device 2 receives the report, and the calculation unit 21 displays the received report on the display unit 26, thereby outputting the report. At this time, the calculation unit 21 generates an image containing the report, and displays the generated image on the display unit 26.

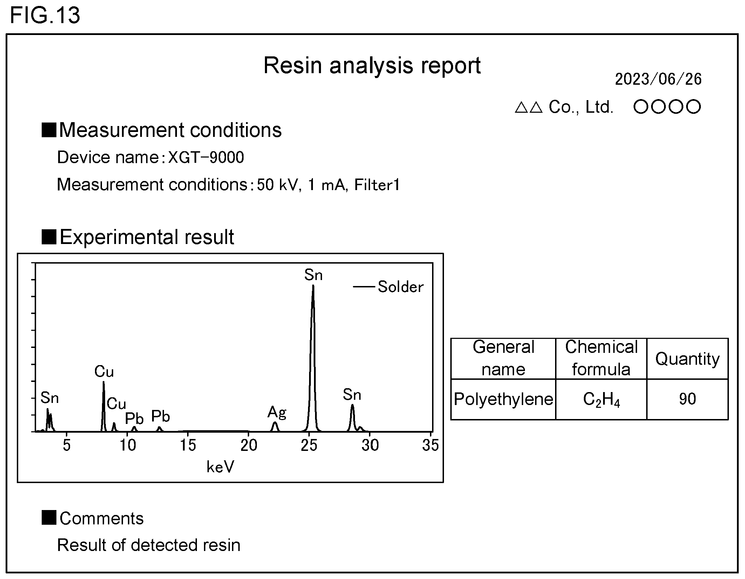

Fig. 13 is a schematic diagram showing an example of a report regarding an analysis result. The report is configured as, for example, a hypertext markup language (HTML) format, a portable document format (PDF), or an image. The details of the analysis result are arranged in accordance with the report format 135, and the details of the analysis result are displayed in an easily viewable, organized manner. The user 5 checks the output report. By displaying the analysis result in the form of an appropriately organized report, the user 5 can easily understand the analysis result in the analyzer 3.

The information processing device 1 performs processing of training the language generation model 132 using evaluation acquired from the user 5. The information processing device 1 stores training data 136 containing the evaluation acquired in S113 in the storage unit 13. The training data 136 records a query, a response output from the language generation model 132 according to a prompt containing the query, and evaluation for the response in association with each other. The calculation unit 11 stores the query, the response, and the evaluation in the storage unit 13 in association with each other every time the evaluation is acquired in S113, thereby generating the training data 136. The training data 136 records a plurality of data sets combining the query, the response, and the evaluation as one data set.

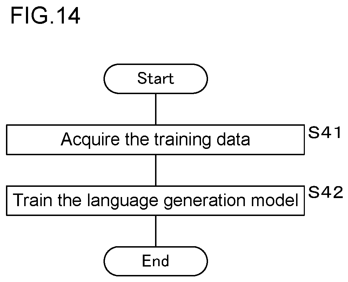

The information processing device 1 trains the language generation model 132 using the training data. Fig. 14 is a flowchart showing an example of a procedure of training processing performed by the information processing device 1. The calculation unit 11 reads the training data 136 stored in the storage unit 13, whereby the information processing device 1 acquires the training data 136 (S41). In S41, the information processing device 1 may acquire the training data 136 from the outside.

Next, the information processing device 1 trains the language generation model 132 using the training data 136 (S42). In S42, the calculation unit 11 inputs a prompt containing the query contained in the training data 136 to the language generation model 132, and calculates a difference between the response output from the language generation model 132 and the response associated with the query in the training data 136. The calculation unit 11 adjusts parameters of the language generation model 132 such that the difference becomes smaller when the evaluation associated with the query in the training data 136 is high, and the difference becomes larger when the evaluation is low. The calculation unit 11 repeatedly performs processing using the plurality of data sets recorded in the training data 136 and adjusts calculation parameters of the language generation model 132, thereby training the language generation model 132.

The calculation unit 11 stores the final parameters adjusted in S42 in the storage unit 13. After S42 ends, the information processing device 1 ends the training processing. The processing in S41 to S42 may be executed by another device different from the information processing device 1. After the language generation model 132 is trained, processing, such as that in S101 to S114, is executed using the trained language generation model 132. By using the language generation model 132 trained using the evaluation from the user 5, it is possible to obtain a more appropriate response.

The present embodiment describes that the information processing device 1 and the terminal device 2 are different from each other, but the information processing device 1 and the terminal device 2 may be integrally configured. The present embodiment describes that the terminal device 2 is separated from the analyzer 3, but the terminal device 2 may be a part of the analyzer 3. For example, the control unit 31 or the analysis unit 32 may also function as the terminal device 2.

The present embodiment describes that the analyzer 3 includes the temperature sensor 342, but the analyzer 3 may include a sensor other than the temperature sensor 342. For example, the analyzer 3 may include a sensor that measures the pressure or the degree of vacuum in the sample chamber 38. Even when the analyzer 3 includes a sensor other than the temperature sensor 342, the information processing device 1 can execute the processing in S23 and S101 to S114 using measurement data by the sensor.

The information processing device 1 may perform processing of acquiring a response according to the state of the analyzer 3, such as the degree of wear and tear of consumables, the degree of deterioration of each part of the analyzer 3, such as the radiation detector 34 or the irradiation unit 35, or the position of the sample stage 36 moved by the drive unit 361. At this time, the information processing device 1 may perform processing of acquiring the state of the analyzer 3 using a method other than the method using the sensor. For example, the control unit 31 measures the cumulative operating time of the analyzer 3, and the information processing device 1 acquires the cumulative operating time from the control unit 31, and determines the degree of wear and tear of the consumables of the analyzer 3 or the degree of deterioration of each part based on the cumulative operating time. The control unit 31 may determine the state of the analyzer 3 based on the cumulative operation time, and the information processing device 1 may acquire the determined state of the analyzer 3 from the control unit 31. The control unit 31 may determine the position of the sample stage 36 from the control history of the drive unit 361, and the information processing device 1 may acquire the position of the sample stage 36 from the control unit 31. After acquiring the state of the analyzer 3, the information processing device 1 executes the processing in S101 to S114 using the acquired state of the analyzer 3. At this time, in S101, the information processing device 1 acquires a query according to the state of the analyzer 3. Through the processing in S101 to S114, the information processing device 1 acquires a response according to the state of the analyzer 3.

The present embodiment describes that the analyzer 3 is an X-ray analyzer, but the analyzer 3 may be an analyzer other than the X-ray analyzer. For example, the analyzer 3 may be a Raman analyzer.

### <Second Embodiment>

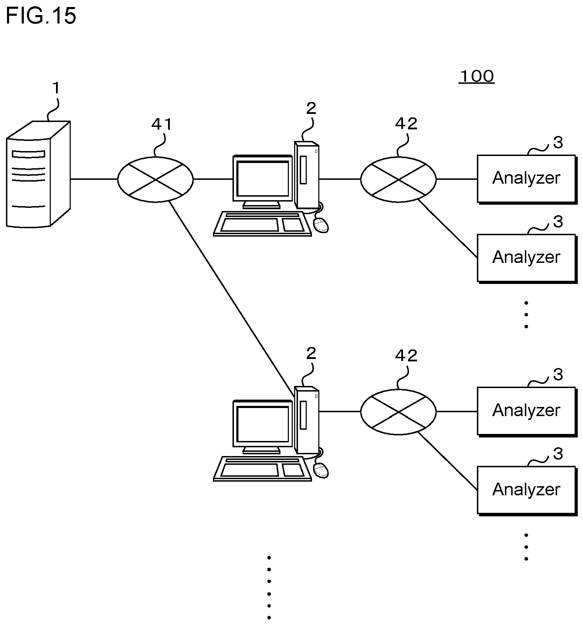

Fig. 15 is a schematic diagram showing a configuration example of an information processing system 100 according to a second embodiment. In the second embodiment, the information processing system 100 includes a plurality of terminal devices 2 and a plurality of analyzers 3. The plurality of terminal devices 2 communicates with an information processing device 1 via a first communication network 41. Each terminal device 2 communicates with the plurality of analyzers 3 via a second communication network 42. The plurality of analyzers 3 includes different types of analyzers 3. For example, some of the analyzers 3 are X-ray analyzers, and the other analyzers 3 are Raman analyzers. The configuration of the terminal device 2 is similar to that in the first embodiment.

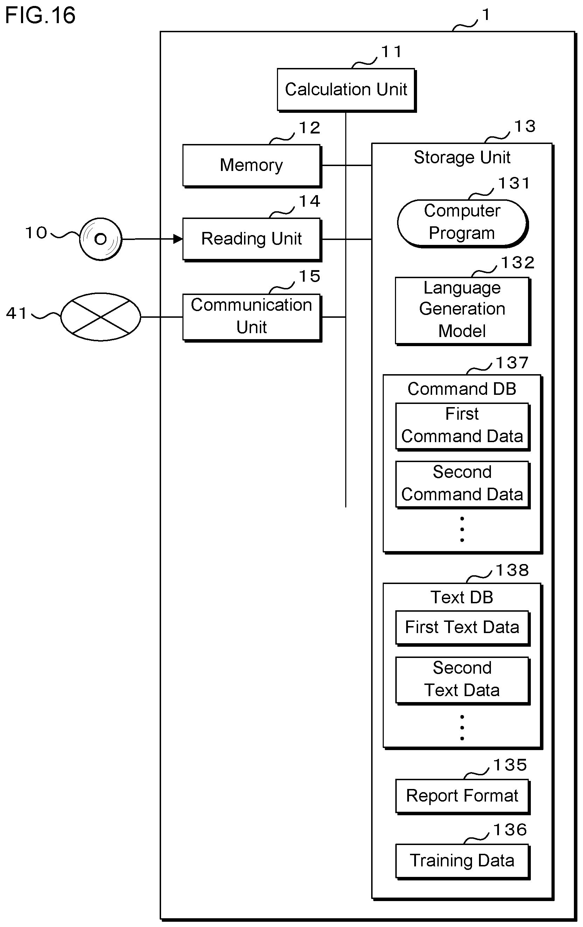

Fig. 16 is a block diagram showing an internal configuration example of the information processing device 1 according to the second embodiment. The information processing device 1 is configured using a computer, such as a server device. As in the first embodiment, the information processing device 1 includes a calculation unit 11, a memory 12, a storage unit 13, a reading unit 14, and a communication unit 15. As in the first embodiment, the information processing device 1 includes a language generation model 132, and the storage unit 13 stores a computer program 131, a report format 135, and training data 136. In addition, the storage unit 13 stores a command database (DB) 137 and a text DB 138.

The command DB 137 contains a plurality of pieces of command data, such as first command data and second command data. Each command data contained in the command DB 137 records a specification of a command to cause the analyzers 3 to execute processing, similarly to the command data 133 in the first embodiment. The command DB 137 contains command data for each type of analyzer 3. That is, each command data contained in the command DB 137 records a specification of a command to cause any analyzer 3 of the plurality of analyzers 3 to execute processing.

The text DB 138 contains a plurality of pieces of text data, such as first text data and second text data. Each text data contained in the text DB 138 records text regarding the analyzers 3, such as manuals, similarly to the text data 134 in the first embodiment. The text DB 138 contains text data for each type of analyzer 3. That is, each text data contained in the text DB 138 records text regarding any analyzer 3 of the plurality of analyzers 3.

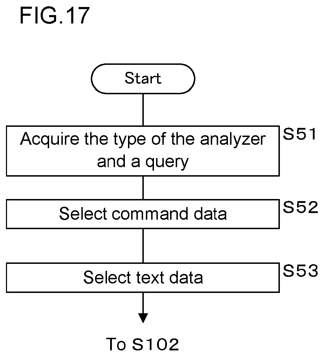

Also in the second embodiment, the information processing system 100 controls each analyzer 3 using the language generation model 132. Fig. 17 is a flowchart showing an example of a procedure of processing executed by the information processing device 1 according to the second embodiment to control the analyzers 3.

The information processing device 1 acquires the type of the analyzer 3 to be controlled and a query regarding the analyzer 3 (S51). In S51, a user 5 operates an operation unit 25, whereby a query is input to the terminal device 2, and the terminal device 2 transmits the query to the information processing device 1. In addition, the terminal device 2 transmits the type of the analyzer 3 to be controlled to the information processing device 1. For example, the terminal device 2 stores information indicating the type of the analyzer 3 in the storage unit 23, and transmits the stored information to the information processing device 1. For example, the terminal device 2 acquires information indicating the type of the analyzer 3 from the control unit 31 of the analyzer 3 to be controlled, and transmits the acquired information to the information processing device 1. The information processing device 1 receives the type of the analyzer 3 and the query transmitted from the terminal device 2 through the communication unit 15, thereby acquiring the type of the analyzer 3 and the query.

Next, the information processing device 1 selects command data according to the type of the analyzer 3 (S52). In S52, the calculation unit 11 selects command data corresponding to the acquired type of the analyzer 3 from the plurality of pieces of command data contained in the command DB 137. That is, the calculation unit 11 selects command data recording a specification of a command to cause the analyzer 3 to be controlled to execute processing.

The information processing device 1 selects text data according to the type of the analyzer 3 (S53). In S53, the calculation unit 11 selects text data corresponding to the acquired type of the analyzer 3 from the plurality of pieces of text data contained in the text DB 138. That is, the calculation unit 11 selects text data recording text regarding the analyzer 3 to be controlled.

Next, the information processing device 1 executes processing in S102 to S114 similar to that in the first embodiment. In S102, the information processing device 1 searches the text data selected in S53 for related information related to the acquired query, and acquires the related information searched for. In S103, a prompt containing the query, the related information, and the command data selected in S52 is created. The information processing device 1 acquires a response according to the query and the related information and the command data from the language generation model 132, through the processing in S104. In this manner, the information processing device 1 controls each analyzer 3.

The information processing device 1 can individually control the plurality of analyzers 3. Even when the types of the plurality of analyzers 3 are different, the information processing device 1 outputs a response according to each analyzer 3 for the same query, and controls each analyzer 3. For example, when a query containing a request to automate an analysis procedure is acquired, the information processing device 1 outputs a response according to each analyzer 3 for the same query, and the analysis procedure in each analyzer 3 can be automated. Also in the second embodiment, as in the first embodiment, the information processing device 1 can execute processing according to a processing result in each analyzer 3, an image such as a photographed image obtained by photographing a sample 6, or measurement data by a sensor provided in each analyzer 3.

In the second embodiment, the information processing system 100 performs processing of creating a report regarding a plurality of analysis results in the plurality of analyzers 3 using the language generation model 132. The information processing system 100 executes processing in S31 to S36 similar to that in the first embodiment. The information processing device 1 stores a report format 135 defining a format of a report obtained by integrating a plurality of analysis results in the plurality of analyzers 3 in the storage unit 13. In S31, the information processing device 1 acquires a query containing a request to create a report obtained by integrating a plurality of analysis results. In S32, the information processing device 1 acquires a plurality of analysis results from the plurality of analyzers 3. In S33, the information processing device 1 acquires the report format 135 defining a format of a report obtained by integrating a plurality of analysis results. In S34, the information processing device 1 acquires a report in which the plurality of analysis results are integrated in accordance with the report format 135.

Through the processing in S31 to S36, the report obtained by integrating the plurality of analysis results in the plurality of analyzers 3 is output. The details of the analysis result are output, with the plurality of analysis results integrated in accordance with the report format 135. For example, the analysis results in the plurality of types of analyzers 3, such as analysis results by the X-ray analyzers and the Raman analyzers, are collectively output. The user 5 checks the output report. By outputting a plurality of analysis results in an appropriately integrated state, the user 5 can easily understand the analysis results in the plurality of analyzers 3. By outputting the plurality of analysis results in the plurality of analyzers 3 are output in combination, it is possible for the user 5 to obtain knowledge that cannot be obtained from a single analysis result.

The present invention is not limited to the content of the above-described embodiments, and various modifications can be made within the scope described in the claims. That is, embodiments obtained by combining technical means appropriately modified within the scope described in the claims are also included in the technical scope of the present invention.

The features described in the embodiments can be combined with each other. In addition, the independent claims and the dependent claims described in the claims can be combined with each other in all combinations, regardless of the citation format. Furthermore, the scope of claims uses a format (multi-claim format), which describes claims that depend on two or more other claims, but is not limited thereto. The scope of claims may use a format (multi-multi claim format), which describes claims that depend on at least one multi-claim.

### Reference Signs List

- 1: information processing device
- 11: calculation unit
- 13: storage unit
- 131: computer program
- 132: language generation model
- 133: command data
- 134: text data
- 135: report format
- 136: training data
- 2: terminal device
- 3: analyzer
- 41: first communication network
- 42: second communication network
- 5: user

## Claims

1. An information processing method, **characterized by** comprising:
acquiring a query regarding an analyzer;
acquiring, using a language generation model, a response regarding control of the analyzer according to the query; and
outputting the response.

2. The information processing method according to claim 1, **characterized by** further comprising:
storing command data recording a specification of a command causing the analyzer to execute processing;
acquiring, using the language generation model, the response containing a command causing the analyzer to execute specific processing, according to the query and the command data; and
inputting the command contained in the response to the analyzer.

3. The information processing method according to claim 2, **characterized by** further comprising:
determining whether the command contained in the response is a command executable by the analyzer; and
acquiring, when the command contained in the response is a command inexecutable by the analyzer, a new response containing a new command, according to the query, the command data, and the command inexecutable by the analyzer, using the language generation model.

4. The information processing method according to claim 3, **characterized by** further comprising:
modifying the command data, according to whether the command contained in the response is a command executable by the analyzer.

5. The information processing method according to any one of claims 2 to 4, **characterized by** further comprising:
acquiring a processing result in the analyzer in accordance with the command input to the analyzer; and
outputting the processing result.

6. The information processing method according to any one of claims 1 to 4, **characterized by** further comprising:
acquiring, as the query, a query containing a request to create a report regarding an analysis result in the analyzer;
acquiring the analysis result in the analyzer and a format of the report;
acquiring, using the language generation model, the report regarding the analysis result created in accordance with the format, according to the query, the analysis result, and the format; and
outputting the report.

7. The information processing method according to claim 6, **characterized by** further comprising:
acquiring a plurality of analysis results of a plurality of analyzers;
acquiring, as the query, a query containing a request to create a report obtained by integrating the plurality of analysis results; and
acquiring, using the language generation model, the report obtained by integrating the plurality of analysis results created in accordance with the format, according to the query, the acquired plurality of analysis results, and the format.

8. The information processing method according to any one of claims 1 to 7, **characterized by** further comprising:
acquiring a type of the analyzer; and
acquiring, using the language generation model, the response according to the query and the type of the analyzer.

9. The information processing method according to any one of claims 1 to 8, **characterized by** further comprising:
acquiring, using the language generation model, the response containing a notification to a user regarding control of the analyzer according to the query; and
outputting the notification.

10. The information processing method according to any one of claims 1 to 9, **characterized by** further comprising:
acquiring measurement data constituted by a measurement value measured by a sensor provided in the analyzer; and
acquiring, using the language generation model, the response, according to the query and the measurement data.

11. The information processing method according to any one of claims 1 to 10, **characterized by** further comprising:
acquiring an image; and
acquiring, using the language generation model, the response according to the query and the image.

12. The information processing method according to claim 11, **characterized by** further comprising:
acquiring, as the image, a photographed image obtained by photographing a sample to be analyzed by the analyzer; and
acquiring, using the language generation model, the response containing information for the analyzer to analyze the sample, according to the query and the photographed image.

13. The information processing method according to any one of claims 1 to 12, **characterized by** further comprising:
acquiring a processing result in the analyzer; and
acquiring, using the language generation model, the response, according to the query and the processing result.

14. The information processing method according to any one of claims 1 to 13, **characterized by** further comprising:
acquiring evaluation from the user for the output response; and
training the language generation model based on training data containing the query, the response and the evaluation.

15. The information processing method according to any one of claims 1 to 14, **characterized by** further comprising:
storing text data regarding the analyzer;
acquiring related information related to the query from the text data; and
acquiring, using the language generation model, the response, according to the query and the extracted related information.

16. An information processing device, **characterized by** comprising:
a calculation unit, wherein
the calculation unit is configured:
to acquire a query regarding an analyzer;
to acquire, using a language generation model, a response regarding control of the analyzer according to the query; and
to output the response.

17. A computer program, **characterized by** causing a computer to execute processing of:
acquiring a query regarding an analyzer;
acquiring, using a language generation model, a response regarding control of the analyzer according to the query; and
outputting the response.
